# EUROPEAN PATENT SPECIFICATION

(11) **EP 1 589 320 B1**
(45) Date of publication and mention of the grant of the patent: **19.10.2011**
(21) Application number: 05008779.0
(22) Date of filing: 21.04.2005
(51) Int. Cl.: G08G 1/0967, G01C 21/26

(54) **Navigation apparatus and navigation method**
Navigationsgerät und -Verfahren
Appareil et procédé de navigation

(30) Priority: 22.04.2004 JP 2004126955; 22.04.2004 JP 2004126962
(43) Date of publication of application: 26.10.2005
(73) Proprietor: AISIN AW CO., LTD., Anjo, Aichi 444-1192 (JP)
(72) Inventor: Ishikawa, Hiroki, Okazaki Aichi 444-8564 (JP); Zaitsu, Tomoyuki, Okazaki Aichi 444-8564 (JP)
(74) Representative: TBK

(56) References cited:
- US-A- 5 173 691
- US-A- 5 933 100
- US-A1- 2002 026 278

## Description

Related fields include a navigation apparatus and a navigation method.

Document US 5,933,100 discloses an automobile navigation system with dynamic traffic data. A central database is provided which includes travel time information for each street segment and transition between street segments in the map database. Based on the travel time information in the database, a route from a current location to a desired destination can be planned in order to have a minim travel time.

In a conventional navigation system, for example, traffic information such as traffic congestion information is received from a road traffic information communication system and the stored information is used for searching for a shortest route (refer to, for example, Japanese Unexamined Patent Application Publication No. 2002-148067).

According to the aforementioned navigation system, traffic information data received from a road traffic information communication system is only for limited roads. Thus it is difficult to search for a most suitable route without storing accurate traffic information data relevant to every road.

In general, various kinds of useful traffic information data exist other than traffic information data from the road traffic information communication system, for example, travel history data from a probe car (hereinafter referred to as probe data) and road traffic sensor census data.

In order to resolve such issues as described above, it is an object of the present invention to provide a navigation system and a navigation method to execute a merge processing for various kinds of traffic information data in accordance with established data precision priorities.

This object is solved by a navigation apparatus as set out in claim 1, and alternatively by a navigation method as set out in claim 5.

Advantageous developments are defined in the dependent claims.

For example, various exemplary embodiments of the invention provide a navigation apparatus comprises a receiving means (22) for receiving current traffic information data, wherein the merge means may execute the merge processing even with the current data.

Various exemplary embodiments of the invention provide a navigation apparatus comprises an arithmetic means (340) for calculating time difference between a travel time according to the stored data and that according to the current data and a priority setting means (350) for setting priorities of the stored data based on the calculated time difference as the specified priorities, wherein the merge means executes the merge processing in accordance with priorities established by the priority setting means. In this manner, the merge processing is executed in accordance with the priorities based on the calculated time difference between current data and each stored data. Because stored data which is less different from current data may be preferentially merged, available area for obtaining traffic information data may be expanded while data may be transferred for a high-quality route search.

Various exemplary embodiments of the invention provide a navigation apparatus, wherein the merge means executes the merge processing by overwriting low-priority stored data with high-priority stored data.

Various exemplary embodiments of the invention provide a navigation apparatus, wherein the merge means merges data for every predetermined area. In this manner, priorities are established for each predetermined area so that it is possible to merge data in view of regional characteristics. Thus available area for obtaining traffic information data may be expanded while data may be transferred for a high-quality route search in view of regional characteristics.

Various exemplary embodiments of the invention provide a navigation apparatus, wherein the priority setting means may set priorities for each predetermined period of time.

Various exemplary embodiments of the invention provide a navigation apparatus, wherein the traffic information data includes travel history data for a plurality of links which indicate roads on map data, and comprises an adjacency condition detection means for detecting adjacency relationships among the plurality of links, and a replace means for replacing a link number allocated for a link which has no adjacency relationship with other links with at least one link number allocated for a link which has a relationship with adjacent links based on the detection by the adjacency condition detection means.

In this manner, an incorrect link number allocated for a link which has no relationship with adjacent links may be accurately corrected with at least one link number allocated for a link which has a relationship with adjacent links. Therefore, after the processing, a reliable route may be searched and traffic information may be correctly displayed with using the dependable travel history data.

Various exemplary embodiments of the invention provide a navigation method, wherein various kinds of traffic information data used in the past are stored and the each stored data is merged in accordance with priorities established for each stored data. In this manner, each stored data may be applicably merged in accordance with established priorities. Thus available area for obtaining traffic information data may be expanded while data may be transferred for a high-quality route search.

Exemplary implementations will now be described with reference to the accompanying drawings, wherein:

Fig. 1 is a block diagram showing an example of the navigation apparatus according to a first embodiment of the present invention;

Fig. 2 is a flowchart showing a program executed by a server of the exclusive information communication system in Fig. 1;

Fig. 3 is a detailed flowchart showing a routine of the priority setting processing in Fig. 2;

Fig. 4 is a detailed flowchart showing a routine of the merge processing in Fig. 2;

Fig. 5 is a block diagram showing an example of the navigation apparatus according to a second embodiment of the present invention;

Fig. 6 is a flowchart showing a program executed by a controller in Fig. 5;

Fig. 7 is a part of a detailed flowchart showing a routine of travel history data correction processing in Fig. 6;

Fig. 8 is a part of a detailed flowchart showing a routine of travel history data correction processing in Fig. 6;

Figs. 9(a) and (b) are diagrams showing a contrast between before and after a correction by a link number replacing processing in step 1251 for travel times and link numbers;

Figs. 10(a) and (b) are diagrams showing a contrast between before and after a correction by a link number replacing processing in step 1262 for travel times and link numbers;

Figs. 11 (a) and (b) are diagrams showing a contrast between before and after a correction by a link number replacing processing in step 1264 for travel times and link numbers; and

Figs. 12(a) and (b) are diagrams showing a contrast between before and after a correction by a link number replacing processing in step 1271 for travel times and link numbers.

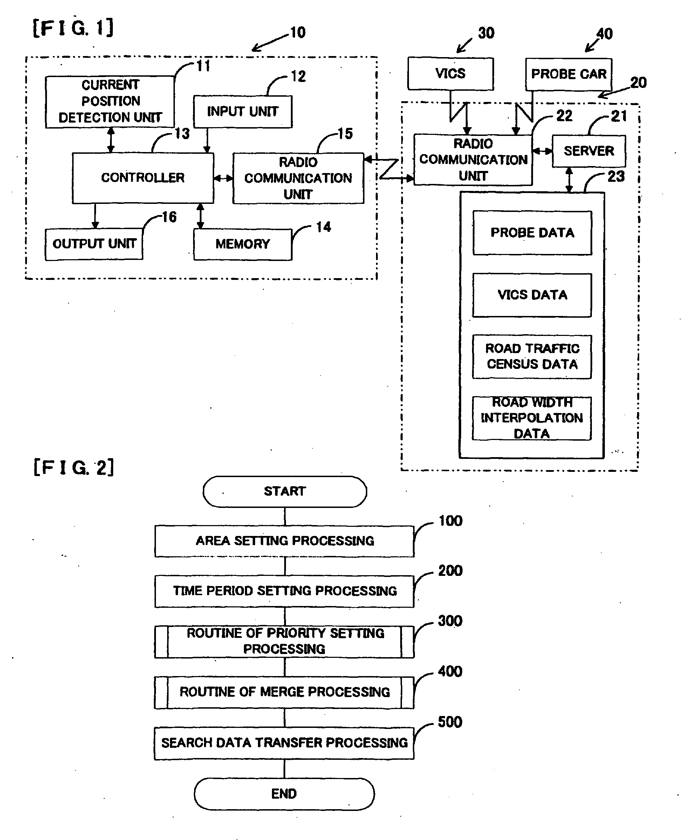

Fig. 1 is a diagram showing an exemplary vehicle navigation system according to the first embodiment of the present invention. The vehicle navigation system 10 is provided with a current position detection unit 11, and a GPS receiver that receives radio waves sent from an artificial satellite of a satellite navigation system (also known as GPS) and detects a current position of the vehicle as well as a present day and time is employed as the current position detection unit 11.

In addition, the navigation system 10 is provided with an input unit 12 and the input unit 12 is a portable remote controller, the operation of which send required information through transmission to a receiving section (not shown) of a controller 13 (described later). Note that instead of using the above remote controller as the input unit 12, a touch panel provided along a display screen in a liquid crystal display panel of an output unit 16 (described later) may be employed as the input unit 12.

Furthermore, the navigation system 10 is provided with the controller 13, a memory 14, a radio communication unit 15, and the output unit 16. The controller 13 is connected with, for example, a CPU, a RAM, and a ROM other than the receiving sections described above via bus lines.

The controller 13 may execute various processing required for route guidance of the vehicle and map display processing based upon detection output of the current position detection unit 11, operation output of the input unit 12, output of the memory 14, output of the radio communication unit 15 and output of an exclusive information communication system 20 (described later).

The memory 14 consists of a hard disk, and map data and traffic information data are stored in the memory 14 as a database that is readable by the controller 13. The radio communication unit 15 receives road traffic information from the exclusive information communication system 20 and also outputs the data to the controller 13.

The exclusive information communication system 20 installed in an exclusive information center may execute wireless communication with, for example, the radio communication unit 15, a road traffic information communication system installed in a road traffic information center (hereinafter also referred to as VICS (registered trademark) 30), and the probe car 40.

Furthermore, the exclusive information communication system 20 may be provided with a server 21, a radio communication unit 22, and a memory 23. The server 21 executes a server program according to flowcharts in Fig. 2 to 4. During execution of the server program, the server 21 may communicate with the radio communication unit 15, VICS 30, and the probe car 40 via the radio communication unit 22. Note that the server program may be written in advance on a ROM of the server 21 and readable by the server 21.

Accumulated probe data, VICS data, road traffic census data, road width interpolation data, and link travel times based on such each data may be stored in a database of the memory 23 as statistical data.

The output unit 16 consists of a display device. Based upon control by the controller 13, the output unit 16 may display information required for the vehicle. Note that the output unit 13 is installed in an instrument panel on an anterior wall of the vehicle and displays information on a display panel such as a liquid crystal panel.

In the present embodiment structured as above, while the exclusive information communication system 20 is in active, the server 21 may initiate the server program according to the flowchart in Fig. 2.

First, in step 100, an area setting processing is executed. During the processing, map data stored in the memory 14 is divided into predetermined regions, for example; prefectual regions.

Next, in step 200, a time period setting processing is executed. During the processing, stored data is merged in accordance with priorities of the stored data (described later) so that period of time may be set in view of the priorities. For example, period of time may be set on a 24-hour basis.

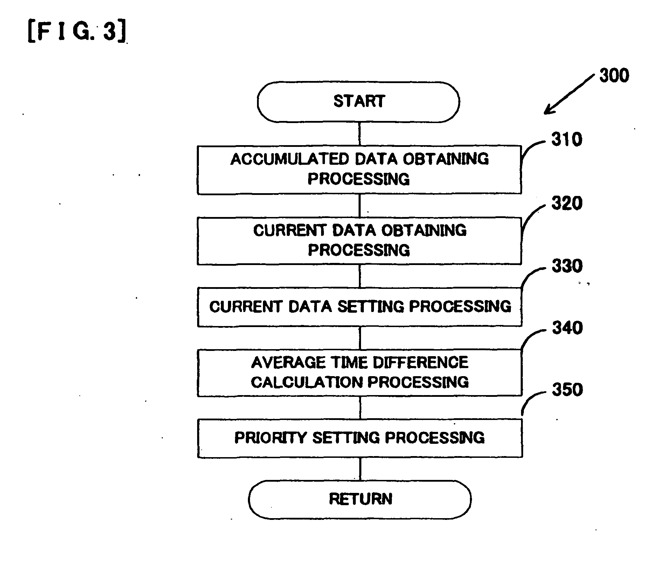

After that, a routine of the priority setting processing 300 is executed as described in Fig. 3. First, in step 310, a stored data obtaining processing is executed. During the processing, data at a current time for each target area which is set in step 100 may be obtained from a database of the memory 23, for example, accumulated probe data, VICS data, and road traffic census data.

Next, in step 320, a current data obtaining processing is executed. During the processing, the radio communication unit 22 may receive current probe data corresponding to the current time from the probe car 40 and input it on the server 21 while the radio communication unit 22 may also receive current VICS data from the VICS 30 and input it on the server 21.

Subsequently, in step 330, a current data setting processing is executed. During the processing, compound data between current probe data obtained in step 320 and current VICS data for links whose data are not included in the current probe data may be set as current data.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes.

Next in step 340, according to an identical link, time difference may be calculated between link travel time of stored probe data corresponding to the current time and that of current data which has been set in step 330. After each time difference for each link is calculated, the average value of the calculated time differences (hereinafter referred to as average time difference) may be further calculated for target areas set in step 100. In a similar manner, average time difference between accumulated VICS data and the current data, and average time difference between road traffic census data and the current data may be calculated.

Subsequently, in step 350, a priority setting processing is executed. During the processing, based on the average time differences in step 340 which are calculated for areas set in step 100, priorities for accumulated road traffic census data, VICS data, and probe data may be established.

For example, according to the current time, if average time difference of road traffic census data, that of VICS data, and that of probe data are ranked in descending order of amount of time difference, priorities are also established in proportion to the order. In the present embodiment, a variable "n" = 1 for road traffic census data, "n" = 2 for accumulated VICS data, and "n" = 3 for stored probe data.

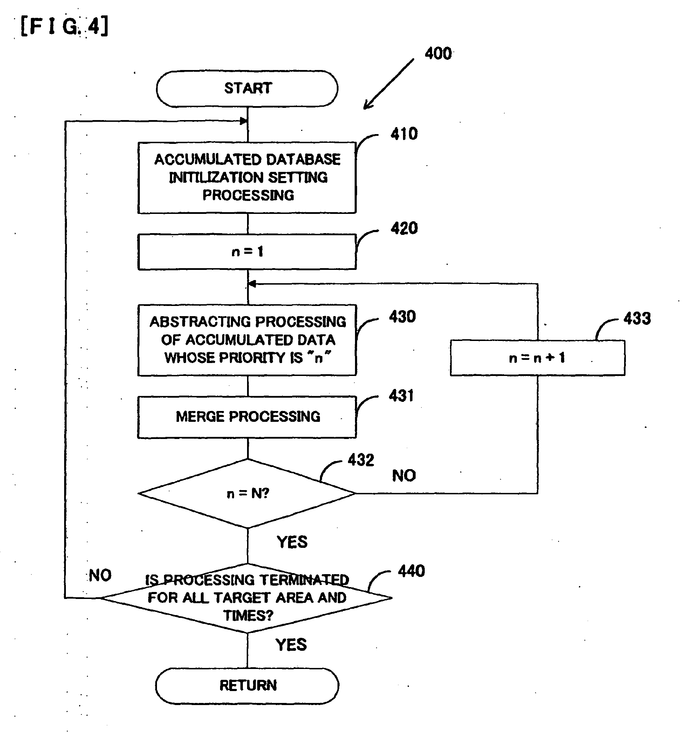

Next, a routine of the merge processing 400 is executed as described in Fig. 4. First, stored database is initialized in step 410. During the operation, road width interpolation data at a desired time (for example, eight o'clock) for a target area may be read out from a database of the memory 14.

As used herein, "road width interpolation data" is data that represents an estimated time required to travel a link. The time required to travel the link is estimated based on the type of road the link represents (e.g., local road, expressway, etc.). Thus, according to this example, road width interpolation data at the desired time of eight o'clock would indicate, that based on the width of the road, it will take 11 minutes to travel the link at eight o'clock.

Subsequently, when variable "n" is set as 1 in step 420, data whose priority is equal to the variable "n" may be extracted from accumulated data in step 430. During the operation, among accumulated road traffic census data corresponding to "n" = 1 for the target area, only data at the target time (for example, eight o'clock) may be read out from the database of the memory 14.

Next, in step 431, the read out data is merged. According to this example, road width interpolation data read out in step 410 may be overwritten with road traffic census data read out in step 430. If, for example, a link includes no road traffic census data but only road width interpolation data, the road width interpolation data may be used for that link.

Then it is determined whether "n" = "N" in step 432. "N" denotes a number of types for target accumulated data. In this example, "N" = 3 because there are three types such as road traffic census data, accumulated VICS data, and stored probe data. At this stage, "n" = 1 as described above. The variable "n" differs from "N" so that "NO" is selected in step 432.

Subsequently, the variable "n" is updated to "n = n + 1 = 2" in step 433. In step 430, among accumulated VICS data corresponding to "n" = 2 for the target area, data at the target time (for example, eight o'clock) may be read out from the database of the memory 14.

When returning to step 431, the read out data is merged. According to this example, accumulated data, which includes the merged road traffic census data from the previous step 431, may be overwritten with VICS data read out in step 430. If a link includes no accumulated VICS data but only accumulated data (which includes merged road traffic census data), the road traffic census data may be used for that link.

Then it is determined whether "n" = "N" in step 432. At this stage, "n" = 2 as described above. The variable "n" differs from "N" so that "NO" is selected in step 432.

Subsequently, the variable "n" is updated to "n = n + 1 = 3" in step 433. In step 430, among accumulated probe data corresponding to "n" = 3 for the target area, data at the target time (for example, eight o'clock) may be read out from the database of the memory 14.

When returning to step 431, the read out data is merged. For example, accumulated data, which includes merged VICS data and merged traffic census data from previous step 431, may be overwritten with probe data read out in step 430. If a link includes no accumulated probe data but only accumulated data, the VICS data may be used for that link.

Then it is determined whether "n" = "N" in step 432. At this stage, "n" = 3 as described above. Thus, "YES" is selected in step 432.

Next, in step 440, it is determined whether all necessary data is merged relevant to all target areas set in step 100 and also relevant to each time in a period of time set in step 200. If the merge processing for all desired areas and times has not been completed yet, "NO" is selected in step 440 and a routine of the merge processing 400 is executed again. The routine of the merge processing 400 is repeated until "YES" is selected in step 440.

As described above, when a plurality of types of data exist redundantly, average time difference between current data and stored data is calculated according to each accumulated data, and higher-priority is established for stored data which has bigger difference. Then each stored data is merged in order of the priorities. Accordingly, because usable stored data may be preferentially merged, available area for obtaining traffic information data may be expanded while data may be transferred for a high-quality route search. In addition, priorities are established for each predetermined area, so that it is possible to provide applicable search database in view of regional characteristics.

In step 440 as described above, "YES" is selected when the merge processing for all target areas and times has been terminated. Subsequently data necessary for searching for a route is transferred in step 500 in Fig. 2. In accordance with the operation, the radio communication unit 22 may send merged data as data necessary for searching for a route to the controller 13 via the radio communication unit 15 and the data may be stored in the database of the memory 14.

Once a series of processing has been terminated as described above, it is possible to search for a guidance route based on accumulated data necessary for search in the database of the memory 14. Therefore the route may be searched within a wider target area even in view of highly accurate forecast on traffic congestion.

Note that the present invention is not limited to the details of the embodiments described above, but various modifications are possible without departing from the scope of the present invention.
1) In step 350 as described above, priorities are set based on average time differences obtained in step 340. However, priorities may be also established for each accumulated data in advance.
2) In step 330 as described above, when current probe data and current VICS data exist redundantly, current probe data is applied for current data. However, current data may be created by weighting both of current probe data and current VICS data and averaging both of them.
3) In step 431 as described above, a merge processing is executed by overwriting accumulated data in a database. However, it is also possible to set each specified ratio for each type of stored data in order of the priorities and execute the merge processing by multiplying each stored data by each specified ratio and averaging the calculation results.
4) In step 100 through 400, the exclusive communication information system 20 executes various kinds of processing for accumulated data and transfers them to the navigation system 10. However, the navigation system 10 may directly obtain the data and execute the same operations in step 100 through 400 for the data instead.

Hereinafter, a second embodiment of the present invention will be described. In the first embodiment of the invention, accumulated probe data, that is, travel history data is applied for data necessary for searching for a route. However, such travel history data is not always very reliable relevant to all routes. For example, if stored route data is not for a route actually taken in the past, the travel history data may be unreliable. Thus, it is not recommended to use such unreliable travel history data for searching for a route, displaying traffic information, and so on.

In order to resolve such issues as described above, it is an object of the present invention in the second embodiment to provide a travel history data correction apparatus and a correction method for accurately correcting travel history data.

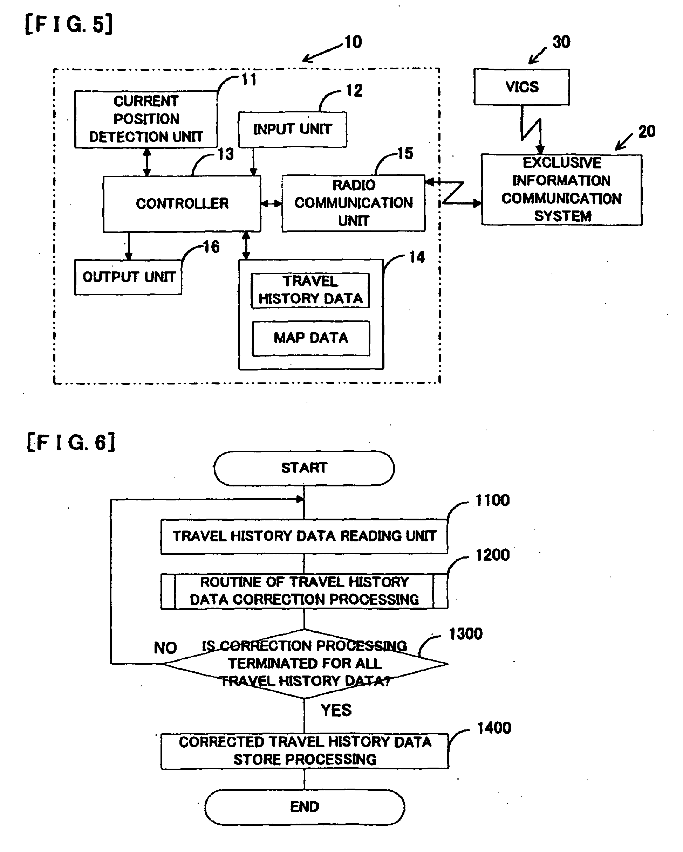

Hereinafter, the second embodiment of the present invention will be described with reference to the drawings. Fig. 5 is a diagram showing an example of a vehicle navigation system according to the second embodiment of the present invention. The vehicle navigation system 10 is provided with the current position detection unit 11, and a GPS receiver that receives radio waves sent from an artificial satellite of a satellite navigation system (also known as GPS) and detects a current position of the vehicle as well as a present day and time is employed as the current position detection unit 11.

In addition, the navigation system 10 is provided with the input unit 12 and the input unit 12 is a portable remote controller, the operation of which send required information through transmission to a receiving section (not shown) of the controller 13 (described later). Note that instead of using the above remote controller as the input unit 12, a touch panel provided along a display screen in a liquid crystal display panel of an output unit 16 (described later) may be employed as the input unit 12.

Furthermore, the navigation system 10 is provided with the controller 13, a memory 114, a radio communication unit 15, and the output unit 16. The controller 13 is connected with, for example, a CPU, a RAM, and a ROM other than the receiving sections described above via bus lines.

The controller 13 executes a program according to the flowchart in Fig. 6. During execution of the program, the controller 13 may execute various kinds of processing required for route guidance of the vehicle and map display processing based upon detection output of the current position detection unit 11, operation output of the input unit 12, output of the memory 14, output of the radio communication unit 15 and output of the exclusive information communication system 20 (described later).

The memory 14 consists of a hard disk, and map data and travel history data are stored in the memory 14 as a database that is readable by the controller 13. Note that such travel history data may include link numbers allocated for links as well as passing times at the links along a vehicle travel route.

The radio communication unit 15 receives road traffic information from the exclusive information communication system 20 and outputs it to the controller 13. Furthermore, the exclusive information communication system 20 transfers various kinds of traffic information data which are received from a road traffic information communication system installed in a road traffic information center (hereinafter also referred to as VICS (registered trademark) 30).

The output unit 16 consists of a display device. Based upon control by the controller 13, the output unit 16 may display information required for the vehicle. Note that the output unit 16 is installed in an instrument panel on an anterior wall of the vehicle and displays on a display panel such as a liquid crystal panel.

In the present embodiment structured as above, while the navigation system 10 is in active, the controller 13 initiates the program according to the flowchart in Fig. 6.

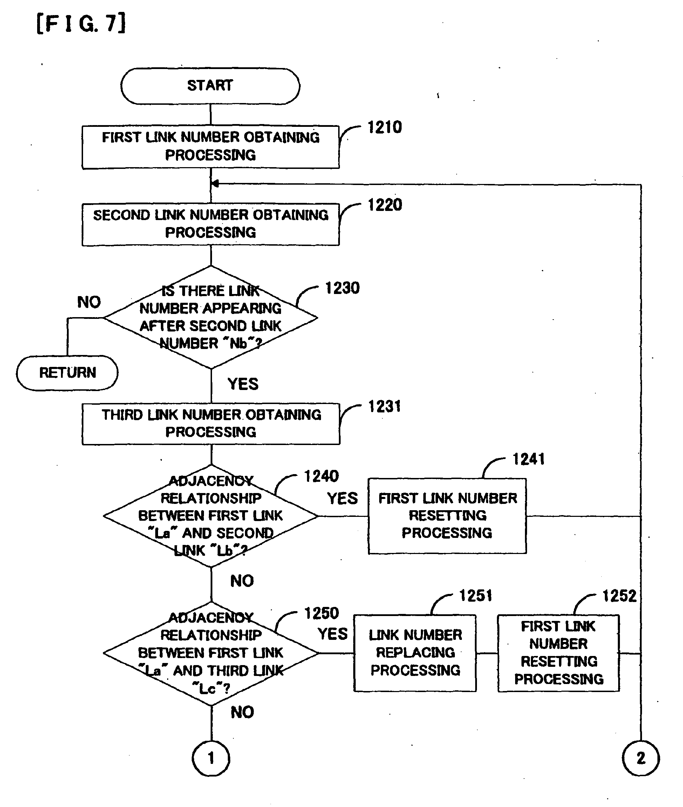

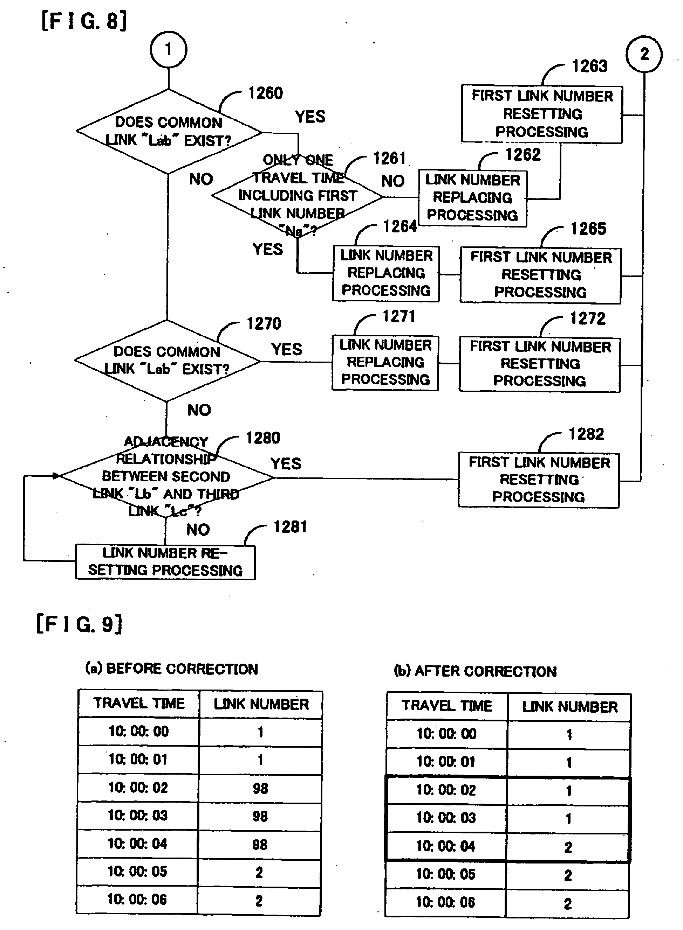

First, in step 1100, travel history data is read out as described in Fig. 6. Link numbers allocated for links as well as passing times at the links along a vehicle travel route may be read out from a database of the memory 114. Next, in step 1200, travel history data is corrected. The travel history data may be corrected, for example, according to the exemplary method of correcting travel history data shown in Figs. 7 and 8.

In step 1300, it is determined whether all of the travel history data is corrected. If not all of the travel history data has been corrected, operation returns to step 110. If all of the travel history data has been corrected, operation continues to step 1400.

In step 1400, the corrected travel history data is stored. For example, the travel history may be stored in a database of the memory 114. Then, operation of the method ends.

Next, a routine of travel history data correcting processing 1200 is executed as described in Fig. 7 and 8. First, a first link number is obtained in step 1210. More specifically, a link number at the earliest time among travel history data read out in step 1100 is obtained as the first link number (Na).

Subsequently, a second link number is obtained in step 1220, that is, a link number which continuously appears after the first link number (Na) is obtained as the second link number (Nb) among the travel history data.

Then in step 1230, it is determined whether there is a link number which further continuously appears after the second link number (Nb) obtained in step 1220 among the travel history data. If such following link number is found, "YES" is selected in step 1220. The link number which continuously appears after the second link number (Nb) is set as the third link number (Nc) in step 1231. In step 1231, the link number that continuously appears after the second link number Nb is set as the third link number Nc.

Next, in step 1240, it is determined whether there is an adjacency relationship between the link corresponding to the first link number (Na) (hereinafter referred to as the first link (La)) and the link corresponding to the second link number (Nb) (hereinafter referred to as the second link (Lb)). If such adjacency relationship is detected between the first link and the second link, what that means is that both links are connected with each other on map data.

As described above, in case that both of the first link (La) and the second link (Lb) connect with each other on map data stored in the memory 114, it is said that there is an adjacency relationship between the two links so that "YES" is selected in step 1240. Then the link number is reset in step 1241. More specifically, the second link number "Nb" is set as the first link number "Na", and the processing in step 1220 is executed as described above.

If the first link (La) is not connected with the second link (Lb) on map data, it is said that there is no adjacency relationship between the two links so that "NO" is selected in step 1240. Next, it is determined whether there is an adjacency relationship between the first link (La) and the link corresponding to the third link number (Nc) (hereinafter referred to as the third link (Lc)) on map data in step 1250.

As described above, in case that both of the first link (La) and the third link (Lc) connect with each other on map data, it is determined that there is an adjacency relationship between the two links. Therefore "YES" is selected in step 1250 and a link number replacing processing is executed in step 1251.

For example in Fig. 9(a), travel history data may include "1"s as the first link numbers (Na) at traveling time 10:00:00 and 10:00:01, "98"s as the second link numbers (Nb) at 10:00:02, 10:00:03, and 10:00:04, and "2"s as the third link numbers (Nc) at 10:00:05 and 10:00:06.

In this example, the first link (La) is not connected with the second link (Lb) on map data because the first link number (Na) is "1" and the second link number (Nb) is "98". That is, it is determined that there is no adjacency relationship between the two links. In addition, the first link (La) is connected with the third link (Lc) on map data because the first link number (Na) is "1" and the third link number (Nc) is "2". What that means is that there is an adjacency relationship between the two links.

When the processing of step 1251 is executed with acceptance on such travel history data, the each second link number (Nb) at travel time 10:00:02 and 10:00:03 is replaced with the first link number (Na), that is, "1" as described in Fig. 9(b). Furthermore, the second link number (Nb) at 10:00:04 is replaced with the third link number (Nc), that is "2" as shown in Fig. 9(b).

By executing such replacing processing, even if an incorrect link number is allocated for a link which has no relationship with adjacent links (previous/following links), it may be accurately corrected with a link number allocated for a link adjacent to the link in question.

Subsequently, the first link number is reset in step 1252. More specifically, the third link number (Nc) is set as the first link number (Na), and the processing in step 1220 is executed as described above.

If the first link (La) is not connected with the third link (Lc) on map data, there is no adjacency relationship between the two links, so that "NO" is selected in step 1250. Then it is determined whether there is a link which has adjacency relationship with both of the first link (La) and the second link (Lb) on map data in step 1260 (Fig. 8). Hereinafter the link is referred to as a common link (Lab).

If the common link (Lab) exists on map data, "YES" is selected in step 1260, and it is determined whether there is only one travel time including the first link number "Na" in step 1261. If more than one travel time including the first link number (Na) exist, "NO" is selected in step 1261 and the link number is replaced in step 1262.

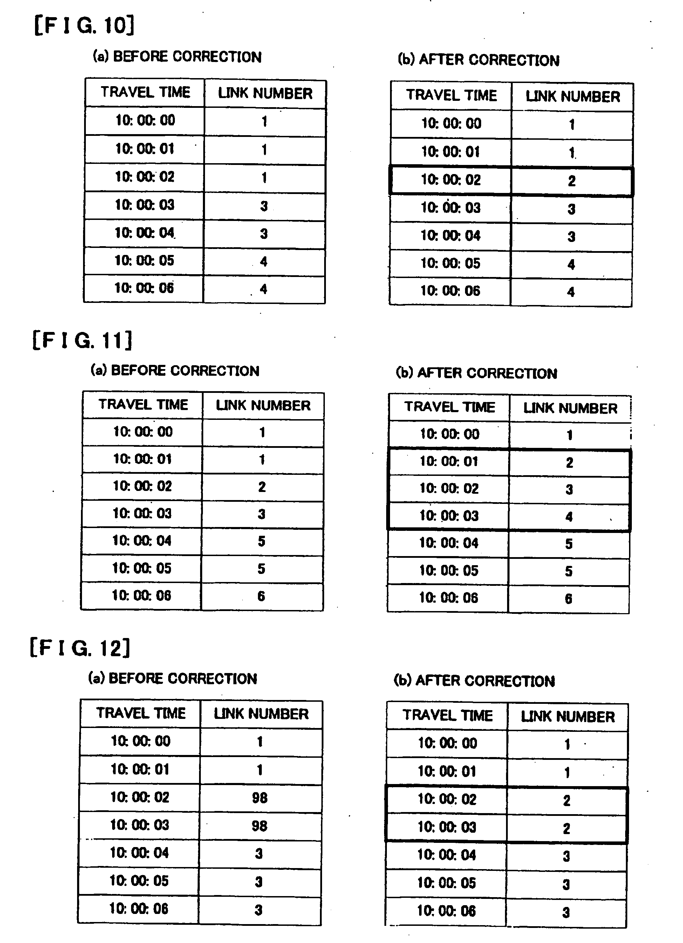

For example in Fig. 10(a), travel history data may include "1"s as the first link numbers (Na) at traveling time 10:00:00, 10:00:01, and 10:00:02, "3"s as the second link numbers (Nb) at 10:00:03 and 10:00:04, and "4"s as the third link numbers (Nc) at 10:00:05 and 10:00:06.

In this example, the first link number (Na) is "1" and the second link number (Nb) is "3". Thus there is a common link (Lab) including link number "2" on map data and further the common link (Lab) has adjacency relationship with both of the first link (La) and the second link (Lb). In addition, in this example, more than one travel time including the first link number (Na) exist.

When the processing of step 1262 is executed with acceptance on such travel history data, the first link number (Na) at travel time 10:00:02 is replaced with the link number allocated for the common link (Lab), that is, "2" as described in Fig. 10(b).

By executing such replacing processing, even if a link number is missing, a link number allocated for a common link "Lab" may be appropriately applied.

Subsequently, the first link number is reset in step 1263. More specifically, the second link number (Nb) is set as the first link number (Na), and the processing in step 1220 is executed as described above.

Furthermore, if only one travel time including the first link number (Na) exists, "YES" is selected in step 1261, and the link number is replaced in step 1264.

For example in Fig. 11 (a), travel history data may include link number "1"s at traveling time 10:00:00 and 10:00:01, "2" at 10:00:02, "3" as the first link number (Na) at 10:00:03, "5"s as the second link numbers (Nb) at 10:00:04 and 10:00:05, and further "6" as the third link number (Nc) at 10:00:06.

In this example, the first link number (Na) is "3" and the second link number (Nb) is "5". Thus it is determined that there is a common link (Lab) including link number "4" on map data and the common link (Lab) has adjacency relationship with both of the first link (La) and the second link (Lb). In addition, in the example, only one travel time including the first link number (Na) exists.

When the processing of step 1264 is executed with acceptance on such travel history data, the link number at travel time 10:00:01 is replaced with link number "2" which continuously appears after the link number in question among the travel history data as described in Fig. 11 (b). Then the link number at travel time 10:00:02 is replaced with link number "3" which continuously appears after the link number in question among the travel history data as described in Fig. 11 (b). Furthermore, the link number at travel time 10:00:03 is replaced with link number "4" which continuously appears after the link number in question among the travel history data as described in Fig. 11 (b).

By executing such replacing processing, even if a link number is missing, a link number allocated for a link which is adjacent to the missing link may be appropriately used.

Subsequently, the first link number is reset in step 1265. More specifically, the second link number (Nb) is set as the first link number (Na), and the processing in step 1220 is executed as described above.

If the common link (Lab) does not exist on map data, "NO" is selected in step 1260, and it is determined whether there is a link which has adjacency relationship with both of the first link (La) and the third link (Lc) on map data in step 1270. Hereinafter the link is referred to as a common link (Lac).

If such common link "Lac" exists, "YES" is selected in step 1270, and the link number is replaced in step 1271.

For example in Fig. 12(a), travel history data may include "1"s as the first link numbers (Na) at traveling time 10:00:00 and 10:00:01, "98"s as the second link numbers (Nb) at 10:00:02 and 10:00:03, and "3"s as the third link numbers (Nc) at 10:00:04, 10:00:05, and 10:00:06.

In this example, the first link number (Na) is "1" and the third link number (Nc) is "3". Thus it is determined that there is a common link (Lac) including link number "2" on map data and further the common link (Lac) has adjacency relationship with both of the first link (La) and the third link (Lc).

When the processing of step 1271 is executed with acceptance on such travel history data, the link numbers at travel time 10:00:02 and 10:00:03 are replaced with the link number allocated for the common link (Lac), that is, "2" for each as described in Fig. 12(b).

By executing such replacing processing, even if an incorrect link number is allocated for a link which has no relationship with adjacent links, it may be accurately corrected with a link number for a link adjacent to the link in question.

Subsequently, the first link number is reset in step 1272. More specifically, the third link number (Nc) is set as the first link number (Na), and the processing in step 1220 is executed as described above.

If the common link (Lac) does not exist on map data, "NO" is selected in step 1270, and it is determined whether there is an adjacency relationship between the second link (Lb) and the third link (Lc) in step 1280.

If the second link (Lb) is not connected with the third link (Lc) on map data, "NO" is selected in step 1280 because there is no adjacency relationship between the two links. Then the link number is reset in step 1281, that is, the third link number (Nc) is set as the second link number (Nb) while a link number which continuously appearing after the replaced second link number (Nb) is set as the third link number (Nc) among travel history data. After that, it is again determined whether there is an adjacency relationship between the second link (Lb) corresponding to the second link number (Nb) and the third link (Lc) corresponding to the third link number (Nc) as set in step 1280.

If there is an adjacency relationship between the second link (Lb) and the third link (Lc), "YES" is selected in step 1280 and the first link number is reset in step 1282. More specifically, the third link number (Nc) is set as the first link number (Na), and the processing in step 1220 is executed as described above.

If there is no link number which continuously appears after the second link number (Nb) and further if the second link (Lb) is adjacent to a destination for the travel history data, "NO" is selected in step 1230 (Fig. 7), and a routine of travel history data correcting processing 1200 is terminated.

After that, it is determined whether all travel history data is corrected in step 1300 (Fig. 6). If correcting processing for all travel history data has not been terminated yet, "NO" is selected and then the processing in step 1100 and the routine of travel history data correcting processing 1200 are executed. The processing in step 1100 and the routine of travel history data correcting processing 1200 are repeated until the correcting processing for all travel history data has been completed.

When the correcting processing for all travel history data has been completed, "YES" is selected in step 1300. Subsequently, in step 1400, the corrected travel history data is stored. The travel history data corrected in the routine of travel history data correcting processing 1200 is stored in a database of the memory 114.

Then the controller 13 searches for a guidance route based on a request for display by the input unit 12. During the guidance route searching processing, the controller 13 executes, for example, route search, traffic information display, and so on, based on the corrected travel history data which is stored in the database of the memory 114. Therefore, after the correction, a reliable route may be searched and traffic information may be correctly displayed with using the dependable travel history data.

Note that the second embodiment of the present invention is not limited to the details described above, but various modifications are possible without departing from the spirit and the scope of the present invention.
1) A link number replacing processing is not particularly limited to the way as described in step 1251. If the first link (La) is not connected with the second link (Lb) on map data, in other words, there is no adjacency relationship between the two links, but if the first link (La) has an adjacency relationship with the third link (Lc); that is, provided that there is an incorrect link number between adjacency related two links with each other, it may be possible to replace half of the second link numbers (Nb) which are close to the first link (La) with the first link number (Na) for each and to replace the other half of the second link numbers with the third link number (Nc) for each.

In this manner, for example in Fig. 9(a), if odd number of second link numbers (Nb) exist in one group, it is possible to replace the middle link number in the group (which corresponds to the travel time 10:00:03) with the first link number (Na).
2) A link number replacing processing is not particularly limited to the way as described in step 1262. If there is no adjacency relationship either between the first link (La) and the second link (Lb) or between the first link (La) and the third link (Lc) on map data, and if a common link (Lab) which is adjacent to both of the first link (La) and the second link (Lb) exists, and further if more than one travel history data including the first link number (Na) exist; that is, provided that a necessary link number allocated for a common link (Lab) is missing between the first link number (Na) and the second link number (Nb), it is possible to replace the link number which should be allocated for the common link (Lab) with the link number at the last travel time relevant to the first link (La) .
3) In step 1264, if the first link (La) and the second link (Lb) are not adjacent, the first link (La) and the third link (Lc) are not adjacent, a common link (Lab) which is adjacent to both of the first link (La) and the second link (Lb) exists, and if only one travel history data including the first link number (Na) exists, a link number that appears before the first link number with a plurality of travel history data may be referenced and used to assign the missing link numbers. For example, as shown in Figs. 11(a) and 11(b), a necessary link number "4" for a common link (Lab) is missing between the first link number "3" and the second link number "5", and there is only one travel history data for the first link "3" (i.e., 10:00:03). The link which appears before the first link and which has more than one travel history data, may have the link number for the last travel history data increased, and the first link adjusted accordingly. Thus, as shown in Figs. 11 (a) and 11 (b), the link number "1" is the first link that appears before the first link number "3" having more than one travel history data, 10:00:01 and 10:00:02. The last travel history data is for link number "1" is increased to link number "2" and the remaining links "2" and the first link "3" are each increased by one accordingly.
4) A link number replacing processing is not particularly limited to the way as described in step 1271. If there is no adjacency relationship either between the first link (La) and the second link (Lb) or between the first link (La) and the third link (Lc) on map data, and if there is no common link (Lab) which is adjacent to both of the first link (La) and the second link (Lb), and further if a common link (Lac) which is adjacent to both of the first link (La) and the third link (Lc) is found; that is, provided that a necessary link number allocated for a common link (Lac) is missing between the first link number (Na) and the third link number (Nc) and an incorrect link number exists instead, it is possible to replace the second link number (Nb) with the link number allocated for the common link (Lac).

For example, as shown in Fig. 12(a), if a first link number "1" and a second link number "98" are not adjacent, a first link number "1" and a third link number "3" are not adjacent, and a common link number "2" is found which is adjacent to both the first and the third link, the second link number "98" may be replaced with the common link number "2". Accordingly, as shown in Fig. 12(b), the non-adjacent link number "98" may be replaced with the adjacent link number "2" and each of the first link "1", the replaced second link "2" and the third link "3" will be correctly adjacent and in order.

The travel history data correction apparatus related to the second embodiment of the invention, comprising; a storage means for storing vehicle travel data taken in the past as travel history data associated with a plurality of link numbers; an adjacency condition detection means (1240, 1250) for detecting adjacency relationships among the plurality of link numbers, and a replace means (1251, 1262, 1264, 1271)for replacing a link number allocated for a link which has no relationship with adjacent links with at least one link number allocated for a link which has a relationship with adjacent links based on the detection by the adjacency condition detection means.

By executing such replacing processing, an incorrect link number allocated for a link which has no relationship with adjacent links may be accurately corrected with at least one link number allocated for a link which has a relationship with adjacent links. Therefore, after the correction, a reliable route may be searched and traffic information may be correctly displayed with using the dependable travel history data.

Further the travel history data correction apparatus related to the second embodiment of the invention comprising a current position detection means (11) for detecting a current position, wherein the storage means may store a link number corresponding to the current position as travel history data.

Further the travel history data correction apparatus according to the second embodiment of the invention, wherein that the storage means may store vehicle travel data taken in the past as travel history data associated with a plurality of link numbers as well as times to pass through the links, and then the replace means may, if there is a link which has no relationship with adjacent links, replace the link number with at least one link number allocated for a link which has a relationship with adjacent links based on a time to pass through the link.

Further the travel history data correction apparatus related to the second embodiment of the invention, comprising: a storage means (14) for storing vehicle travel data taken in the past as travel history data associated with a plurality of link numbers; a first adjacency condition detection means (1240) for detecting on the travel history data whether there is an adjacency relationship between a first link (La) which is allocated a first link number (Na) and a second link (Lb) which continuously appears after the first link number and which is allocated at least one second link number (Nb); a second adjacency condition detection means (1250) for detecting on the travel history data whether there is an adjacency relationship between the first link and a third link (Lc) which continuously appears after the second link number and which is allocated a third link number (Nc); and a replace means (1251) for replacing, if the first adjacency condition detection means detects no relationship but the second adjacency condition detection means detects a relationship, the second link number with at least one first link number and/or third link number.

By executing such replacing processing, an incorrect link number allocated for a link which has no relationship with adjacent links may be accurately corrected with at least one previous and/or following link number. Therefore, after the processing, a reliable route may be searched and traffic information may be correctly displayed with using the dependable travel history data.

Furthermore, the travel history data correction apparatus according to the second embodiment of the invention wherein the second adjacency condition detection means detects whether there is an adjacency relationship between the first link and the third link, comprises, a first common link detection means (1260) for detecting whether there is a first common link (Lab) which connects with both of the first link and the second link, and another replace means (1262, 1264) for replacing a link number at a last time for the first link with a link number allocated for the first common link if both of the first adjacency condition detection means and the second adjacency condition detection means detect no relationship and further if the first common link is detected .

By executing such replacing processing, even if a link number is missing, a link number allocated for a common link may be appropriately used.

Additionally, the travel history data correction apparatus related to the second embodiment of the invention includes a number of data detection means for detecting whether there is only one travel history data including the first link number and a storage means for storing vehicle travel history as travel history data in relationship to a plurality of link numbers and travel times. If a first link (La) and a second link (Lb) are not adjacent, the first link (La) and the third link (Lc) are not adjacent, a common link (Lab) which is adjacent to those of the first link (La) and the second link (Lb) exists, and only one travel history data including the first link number (La) exists, the controller 13 may reference a link number that appears before the first link number and has a plurality of travel times (travel history data, to assign missing link numbers). For example, as shown in Figs. 11(a) and 11(b), a necessary link number "4" for a common link (Lab) is missing between the first link number "3" and the second link number "5", and there is only one travel history data for the first link "3" (i.e., 10:00:03). The controller may increase the link number for the last travel history data of a link which appears before the first link and which has more than one travel history data, and may adjust the following link numbers accordingly. Thus, as shown in Figs. 11(a) and 11(b), the link number "1" is the first link that appears before the link number "3" having more than one travel history data, 10:00:01 and 10:00:02. The last travel history data is for link number "1" is increased to link number "2" and the remaining links "2" and the first link "3" are each increased by one accordingly.

By executing such replacing processing, even if a link number is missing, a link number adjacent to the missing link number may be appropriately used.

Further the travel history data correction apparatus related to the second embodiment of the invention, wherein the second adjacency condition detection means detects whether there is an adjacency relationship between the first link and the third link, the first common link detection means detects whether there is a first common link which connects with both of the first link and the second link, a second common link detection means (1270) detects whether there is a second common link (Lac) which connects with both of the first link and the third link, and a replace means (1271) replaces a link number for the second link with a link number allocated for the second common link, provided that no relationship is found by both of the first detection and the second detection, that no common link is detected by the first common link detection, and further that a common link is found by the second common link detection.

By executing such replacing processing, an incorrect link number allocated for a link which has no relationship with adjacent links may be accurately corrected with a link number allocated for a link adjacent to the link in question.

In addition, a travel history data correction method related to the second embodiment of the invention, wherein that vehicle travel data taken in the past is stored as travel history data associated with a plurality of link numbers, and if there is a link which has no relationship with adjacent links, the link number is replaced with at least one link number allocated for a link which has a relationship with adjacent links in view of adjacency relationships among the plurality of link numbers.

By executing such replacing processing, an incorrect link number allocated for a link which has no relationship with adjacent links may be accurately corrected with at least one link number allocated for a link which has a relationship with adjacent links.

In addition, a travel history data correction method related to the second embodiment of the invention, wherein that vehicle travel data taken in the past is stored as travel history data associated with a plurality of link numbers, detects that there is no adjacency relationship between the first link (La) including the first link number (Na) and the second link (Lb) including at least one second link number (Nb) which appears right after the first link number, further detects that there is an adjacency relationship between the first link and the third link (Lc) including the third link number (Nc) which appears right after the second link number, and replaces the second link number with at least one first link number and/or third link number on travel history data.

By executing such replacing processing, an incorrect link number allocated for a link which has no relationship with adjacent links may be accurately corrected with at least one previous and/or following link number.

Note that the reference numerals within the parentheses of the above respective means show the corresponding relation with concrete means described in the second embodiment.

While various features have been described in conjunction with the exemplary embodiments outlined above, various alternatives, modifications, variations, and/or improvements of those features may be possible. Accordingly, the exemplary implementations of the invention, as set forth above, are intended to be illustrative. Various changes may be made without departing from the scope of the invention.

As described above, a navigation apparatus and a navigation method execute a merge processing for various kinds of traffic information data in accordance with established data precision priorities. The apparatus and method calculate average time difference between accumulated data and current data relevant to a predetermined area, set priorities for accumulated data based on the calculated average time difference, and then merge the accumulated data for the area in accordance with established priorities for the area.

## Claims

1. A navigation apparatus, comprising:
a storage means **(23)** for storing various kinds of traffic information data used in the past;
a merge means **(420 to 433)** for merging the stored data in accordance with established priorities for each stored data,
a receiving means **(22)** for receiving current traffic information data; wherein the merge means executes the merge processing with the current data,
an arithmetic means **(340)** for calculating time difference between travel time of the stored data and that of the current data; and
a priority setting means **(350)** for setting priorities of the stored data as the specified priorities based on calculated time difference;
wherein the merge means is adapted to execute the merge processing by priorities specified by the priority setting means.

2. The navigation apparatus of one of claim 1, wherein the merge means executes the merge processing by overwriting low-priority stored data with high-priority stored data.

3. The navigation apparatus of one of claim 1 through 2, wherein the priority setting means is adapted to set the priority for every predetermined period of time.

4. The navigation apparatus of one of claim 1 through 3, wherein the traffic information data includes travel history data for a plurality of links which indicate roads on map data, further comprising:
an adjacency condition detection means for detecting adjacency relationship among the plurality of links; and
a replace means for replacing a link number allocated for a link which has no adjacency relationship with other links with at least one link number allocated for a link which has a relationship with adjacent links among a plurality of links based on the detection by the adjacency condition detection means.

5. A navigation method, comprising the steps of:
storing various kinds of traffic information data used in the past; and
merging **(420 to 433)** the stored data in accordance with established priorities for each stored data,
receiving **(320)** current traffic information data; wherein the merge processing is executed with the current data,
calculating **(340)** time difference between travel time of the stored data and that of the current data; and
setting **(350)** priorities of the stored data as the specified priorities based on calculated time difference;
wherein the merge processing is executed by priorities specified by the priority setting means.

## Patentansprüche

1. Navigationsvorrichtung, mit:
einer Speichereinrichtung (23) zur Speicherung von verschiedenen Arten von in der Vergangenheit genutzten Verkehrsinformationsdaten;
einer Verbindungseinrichtung (420 bis 433) zur Verbindung der gespeicherten Daten gemäß bestehender Prioritäten für jedes gespeicherte Datum,
einer Empfangseinrichtung (22) zum Empfang von aktuellen Verkehrsinformationsdaten, wobei die Verbindungseinrichtung den Verbindungsprozess mit den aktuellen Daten durchführt,
einer Recheneinrichtung (340) zur Berechnung einer Zeitdifferenz zwischen Reisezeiten der gespeicherten Daten und der aktuellen Daten; und
einer Prioritätseinstelleinrichtung (350) zur Einstellung von Prioritäten der gespeicherten Daten als die bestimmten Prioritäten basierend auf einer berechneten Zeitdifferenz;
wobei die Verbindungseinrichtung dazu eingerichtet ist, den Verbindungsprozess mit von der Prioritätseinstelleinrichtung bestimmten Prioritäten auszuführen.

2. Navigationsvorrichtung nach Anspruch 1, wobei die Verbindungseinrichtung den Verbindungsprozess durch Überschreiben gespeicherter Daten niedriger Priorität mit gespeicherten Daten hoher Priorität ausführt.

3. Navigationsvorrichtung nach einem der Ansprüche 1 bis 2, wobei die Prioritätseinstelleinrichtung dazu eingerichtet ist, die Priorität für jeden vorbestimmten Zeitabschnitt einzustellen.

4. Navigationsvorrichtung nach einem der Ansprüche 1 bis 3, wobei die Verkehrsinformationsdaten Reiseverlaufsdaten für eine Vielzahl von Verbindungen, die Straßen auf Kartendaten anzeigen, enthalten, ferner mit:
einer Nachbarschaftszustand-Erfassungseinrichtung zur Erfassung von Nachbarschaftsbeziehungen unter der Vielzahl von Verbindungen; und
einer Ersetzungseinrichtung zum Ersetzen einer Verbindungsnummer, die einer Verbindung zugeordnet ist, die keine Nachbarschaftsbeziehung mit anderen Verbindungen aufweist, mit zumindest einer Verbindungsnummer, die einer Verbindung zugeordnet ist, die eine Beziehung mit benachbarten Verbindungen unter einer Vielzahl von Verbindungen aufweist, basierend auf der Erfassung durch die Nachbarschaftszustand-Erfassungseinrichtung.

5. Navigationsverfahren, mit den Schritten:
Speichern verschiedener Arten von in der Vergangenheit genutzten Verkehrsinformationsdaten; und
Verbinden (420 bis 433) der gespeicherten Daten gemäß bestehender Prioritäten für jedes gespeicherte Datum,
Empfangen (320) von aktuellen Verkehrsinformationsdaten, wobei der Verbindungsprozess mit den aktuellen Daten durchführt wird,
Berechnen (340) einer Zeitdifferenz zwischen Reisezeiten der gespeicherten Daten und der aktuellen Daten; und
Einstellen (350) von Prioritäten der gespeicherten Daten als die bestimmten Prioritäten basierend auf einer berechneten Zeitdifferenz;
wobei der Verbindungsprozess mit von der Prioritätseinstelleinrichtung bestimmten Prioritäten ausgeführt wird.

## Revendications

1. Appareil de navigation, comprenant :
un moyen de stockage (23) destiné à stocker divers types de données d'informations de trafic utilisées préalablement ;
un moyen de fusion (420 à 433) destiné à fusionner les données stockées conformément à des propriétés établies pour chaque donnée stockée,
un moyen de réception (22) destiné à recevoir des données actuelles d'informations de trafic ; où le moyen de fusion exécute le traitement de fusion avec les données actuelles,
un moyen arithmétique (340) destiné à calculer une différence temporelle entre le temps de déplacement des données stockées et celui des données actuelles ; et
un moyen (350) d'établissement de priorité destiné à établir les priorités des données stockées en tant que propriétés spécifiées sur la base de la différence temporelle calculée ;
où le moyen de fusion est adapté pour exécuter le traitement de fusion par des priorités spécifiées par le moyen d'établissement de priorité.

2. Appareil de navigation de l'une de la revendication 1, dans lequel le moyen de fusion exécute le traitement de fusion en écrasant les données stockées non-prioritaires avec les données stockées prioritaires.

3. Appareil de navigation de l'une de la revendication 1 à 2, dans lequel le moyen d'établissement de priorité est adapté pour établir la priorité pour chaque période prédéterminée.

4. Appareil de navigation de l'une de la revendication 1 à 3, dans lequel les données d'informations de trafic comportent des données d'historique de déplacement pour une pluralité de liaisons qui indiquent des routes sur des données de carte, comprenant en outre :
un moyen de détection de condition d'adjacence destiné à détecter une relation d'adjacence parmi la pluralité de liaisons ; et
un moyen de remplacement destiné à remplacer un nombre de liaison alloué pour une liaison qui n'a pas de relation d'adjacence avec d' autres liaisons avec au moins un nombre de liaisons alloué pour une liaison qui a une relation avec des liaisons adjacentes parmi une pluralité de liaisons sur la base de la détection par le moyen de détection de condition d'adjacence.

5. Procédé de navigation, comprenant les étapes qui consistent :
à stocker divers types de données d'informations de trafic utilisées préalablement ; et
de fusionner (420 à 433) les données stockées conformément à des propriétés établies pour chaque donnée stockée,
de recevoir (320) des données actuelles d'informations de trafic ; où le traitement de fusion est exécuté avec les données actuelles,
de calculer (340) une différence temporelle entre le temps de déplacement des données stockées et celui des données actuelles ; et
d'établir (350) des priorités des données stockées en tant que priorités spécifiées sur la base de la différence temporelle calculée ;
où le traitement de fusion est exécuté par des priorités spécifiées parle moyen d'établissement de priorité.
